(19) **Europäisches Patentamt**

**European Patent Office**

**Office européen des brevets**

(11) **EP 1 411 580 B1**

(12) **FASCICULE DE BREVET EUROPEEN**

(45) Date de publication et mention
de la délivrance du brevet:
**28.09.2005 Bulletin 2005/39**

(51) Int Cl.⁷: $H01M\ 10/48$

(21) Numéro de dépôt: **03300162.9**

(22) Date de dépôt: **16.10.2003**

(54) **Dispositif pour diagnostiquer l'état de corrosion d'une batterie notamment de véhicule automobile**

Vorrichtung zur Feststellung des Korrosionszustandes einer Batterie, insbesondere einer Kraftfahrzeugbatterie

Device for diagnosing of the state of corrosion of a battery, in particular one of a vehicle

(84) Etats contractants désignés:
**BE DE ES FR GB IT**

(30) Priorité: **16.10.2002 FR 0212870**

(43) Date de publication de la demande:
**21.04.2004 Bulletin 2004/17**

(73) Titulaire: **Renault s.a.s.**
**92100 Boulogne Billancourt (FR)**

(72) Inventeurs:
• **Bogel, Wolfgang**
**78000 Versailles (FR)**
• **Hiron, Christian**
**78690 Les Essarts le Roi (FR)**

(74) Mandataire: **Davies, Owen Robert Treharne**
**Renault SAS**
**Technocentre**
**TCR-GRA-1-55**
**1, avenue du Golf**
**78288 Guyancourt Cedex (FR)**

(56) Documents cités:
**FR-A- 2 241 148        FR-A- 2 408 917**
**US-A- 5 750 285**

• **PATENT ABSTRACTS OF JAPAN vol. 011, no. 231 (E-527), 28 juillet 1987 (1987-07-28) -& JP 62 047975 A (SHIN KOBE ELECTRIC MACH CO LTD), 2 mars 1987 (1987-03-02)**

**Description**

La présente invention se rapporte à un dispositif pour diagnostiquer l'état de corrosion d'une batterie notamment de véhicule automobile.

On connaît de la technique antérieure un certain nombre de méthodes pour estimer l'état de charge d'une batterie.

Dans quelques méthodes, classiquement, on mesure une variation de tension correspondant à une variation de courant aux bornes de la batterie pour une température donnée, et on déduit de cette mesure une image de la résistance interne de la batterie. On compare ensuite cette image à une base de données préétablie, et on déduit de cette comparaison l'état de charge de la batterie.

Dans le document FR-2241148, un système comprend un évidement situé dans l'électrode de la batterie. L'évidement est rempli de poudre colorée qui est relâchée dans l'électrolyte de la batterie quand l'électrode est corrodée, la coloration de l'électrolyte indique qu'il est temps de changer la batterie. Un des inconvénients de ce système est qu'il est nécessaire de modifier au moins une des électrodes de la batterie et qu'il est nécessaire de fournir un colorant indicateur. Aussi, l'addition d'un colorant indicateur peut être un inconvénient pour le recyclage de la batterie.

Bien que ces méthodes soient en général assez efficaces, elles ne permettent pas de diagnostiquer de manière fiable une cause très fréquente de défaillance des batteries, à savoir la corrosion de certaines des électrodes due à l'électrolyte (en général de l'acide sulfurique).

Ceci est vrai en particulier lorsqu'une batterie est presque complètement chargée, car alors sa résistance interne est sensiblement indépendante du degré de corrosion de ses électrodes.

La présente invention a pour but de fournir des moyens améliorés pour diagnostiquer de manière fiable le degré de corrosion des électrodes d'une batterie.

On atteint ce but de l'invention avec un dispositif pour diagnostiquer l'état de corrosion d'une batterie caractérisé en ce que lesdits moyens mécaniques comprennent un élément mobile avec des moyens élastiques entre une première position compressée d'origine et une seconde position relâchée dans laquelle l'élément mobile réalise un contact mécanique avec un élément de signalisation indiquant à l'extérieur ledit degré de corrosion de la batterie.

Grâce à ces caractéristiques, on peut obtenir une indication fiable sur le degré de corrosion de certaines des électrodes de la batterie sans qu'il soit nécessaire de recourir à quelque mesure de tension ou de courant aux bornes de la batterie que ce soit, et sans utiliser des moyens de calculateur. Un autre avantage de la solution est qu'il n'est pas nécessaire de modifier les électrodes de la batterie et que le recyclage de la batterie est simplifié.

Suivant d'autres caractéristiques du dispositif selon l'invention :

- l'élément mobile est maintenu dans ladite première position par un témoin jusqu'à ce que ledit témoin change de forme après avoir atteint ledit degré de corrosion, ledit changement de forme étant adapté à ce que l'élément mobile atteigne ladite seconde position relâchée, de préférence ledit témoin change de forme en se cassant;
- l'élément mobile comprennent un piston et les moyens élastiques comprennent un ressort, les deux étant logés dans une douille;
- le dispositif comprend un capteur autonome monté dans la batterie indépendamment des électrodes de la batterie;
- l'élément mobile porte une pastille colorée, et ledit élément de signalisation comprend un élément transparent dont une extrémité est respectivement éloignée ou en contact avec ladite pastille colorée selon que ledit piston se trouve en position comprimée ou relâchée, et dont l'autre extrémité débouche à l'extérieur de ladite batterie;
- l'organe témoin est formé dans un alliage métallique.

Suivant d'autres caractéristiques de cette batterie :

- elle est équipée d'un dispositif conforme à l'une quelconque des revendications précédentes pour diagnostiquer le degré de corrosion de parties de certaines desdites électrodes;
- les certaines électrodes sont des anodes;
- les parties d'électrodes sont des grilles métalliques desdites anodes.

L'invention va maintenant être décrite à titre d'exemple illustratif et non limitatif avec les références aux figures annexées dans lesquelles:

- la figure 1 est une vue partielle en coupe d'une batterie équipée du dispositif selon l'invention,
- la figure 2 est une vue en coupe du dispositif selon l'invention lorsqu'il se trouve dans une première position correspondant à un degré de corrosion de certaines des électrodes inférieure à un seuil prédéterminé, et
- la figure 3 est une vue en coupe du dispositif selon l'invention lorsqu'il se trouve dans une deuxième position correspondant à un degré de corrosion de certaines des électrodes supérieur à un seuil prédéterminé.

Dans ce qui suit et en référence aux figures, on va décrire le dispositif selon l'invention dans le cas particulier où il est installé sur une batterie notamment de véhicule automobile, mais il va de soi qu'un tel dispositif pourrait être installé sur plusieurs types d'accumulateur.

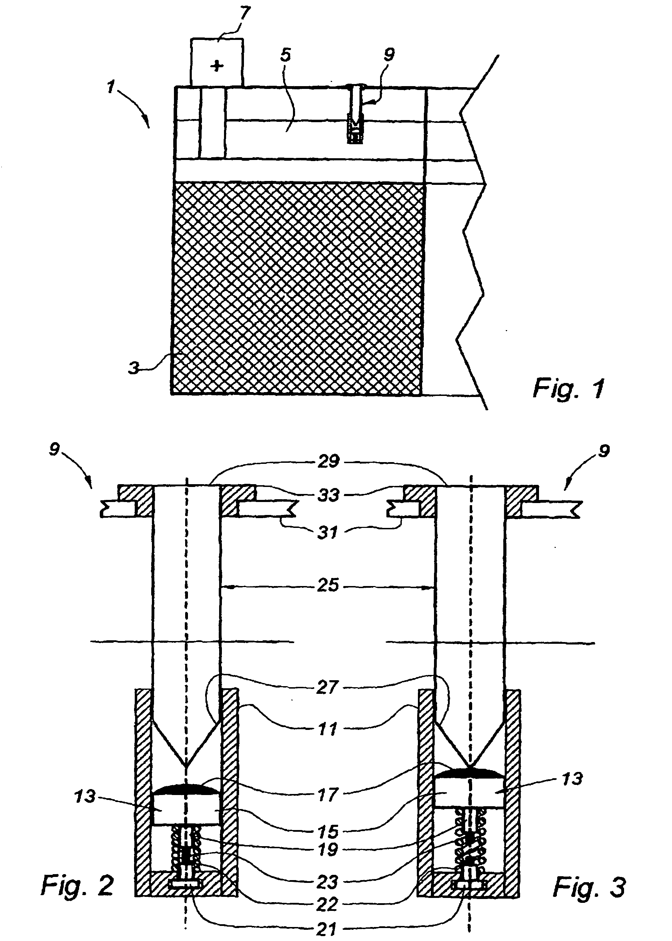

On se reporte à présent à la figure 1, sur laquelle on a représenté une batterie 1 comprenant un faisceau d'électrodes 3 immergées dans un électrolyte 5. Le faisceau d'électrodes 3 comprend des électrodes négatives (ou cathodes) et des électrodes positives (ou anodes) disposées en sandwich de manière alternée.

Les cathodes peuvent être formées par des plaques de plomb, et les anodes peuvent être formées par des grilles métalliques supportant du peroxyde de plomb. Les cathodes et les anodes sont reliées en série respectivement à des bornes négative (non représentée) et positive 7 fixées sur le dessus de la batterie 1.

L'électrolyte 5 peut être formé par de l'acide sulfurique légèrement dilué. L'équation chimique gouvernant alors la décharge de ce type de batterie dite « au plomb » est alors:

$$Pb + PbO_2 + 2H_2SO_4 \rightarrow 2SO_4Pb + 2H_2O$$

Comme cela est visible sur la figure 1, le dispositif 9 selon l'invention est fixé sur le dessus de la batterie 1, et trempe en permanence dans la partie de l'électrolyte 5 qui se trouve au-dessus du faisceau d'électrodes 3.

Pour plus de détails sur ce dispositif, on se reporte à présent à la figure 2, sur laquelle on a représenté ce dispositif dans une première position. Ce dispositif comprend une douille 11 à l'intérieur de laquelle est monté coulissant un élément mobile sous la forme d'un piston 13. Ce piston comprend une tête 15 revêtue d'une pastille colorée 17, ainsi qu'une tige 19.

Un pion 21 est fixé au fond de la douille 11, et un élément élastique sous la forme d'un ressort 22 centré sur le pion 21 et sur la tige 19 tend à écarter le piston 13 du fond de la douille 11.

Un organe témoin 23 relie la tige 19 du piston 13 au pion 21, à l'encontre de la poussée exercée par le ressort 22. Cet organe témoin 23, qui peut avoir la forme d'un bâtonnet cylindrique, est formé dans un alliage tel que son degré de corrosion soit représentatif du degré de corrosion des grilles des anodes de la batterie.

Cet organe témoin 23 est en outre calibré, c'est-à-dire dimensionné pour céder sous l'effort exercé par le ressort 22 lorsque son degré de corrosion dépasse un seuil prédéterminé, correspondant à un degré de corrosion des grilles des anodes de la batterie 1 au-delà duquel on estime que la batterie doit être remplacée. Dans le mode de réalisation non limitatif qui est illustré, ce changement de forme du témoin 23 est réalisé par une rupture du témoin 23. Les autres façon équivalentes ne sont pas exclues, comme par exemple un étirement du témoin 23.

La douille 11 est surmontée d'un élément de signalisation 25 formé dans une matière transparente telle que du plastique. L'extrémité 27 de cet élément située au-dessus du piston 13 est de préférence biseautée, comme cela est représenté. L'autre extrémité 29 de l'élément 25 est plate, et maintenue solidaire de la partie supérieure 31 de la batterie 1 au moyen d'une collerette 33. La version biseautée transmet le signal de la pastille en contact mécanique avec l'élément de signalisation 25 d'une façon plus visible pour l'utilisateur.

On se reporte à présent à la figure 3, sur laquelle on a représenté le dispositif selon l'invention dans une deuxième position. Dans cette deuxième position, l'organe témoin 23 a cédé, de sorte que, poussé par le ressort 22, le piston 13 se trouve en contact mécanique contre l'extrémité 27 de l'élément 25. Le mode de fonctionnement et les avantages du dispositif selon l'invention résultent clairement de la description qui précède.

Tant que le dispositif 9 se trouve dans la première position représentée à la figure 2, c'est à dire dans une position d'origine comprimée, la pastille 17 est éloignée de l'extrémité 27 de l'élément 25, et il n'est pas possible d'apercevoir la couleur de cette pastille 17 par l'extrémité 29 de l'élément 25.

Au contraire, lorsque le dispositif 9 se trouve dans la deuxième position, c'est à dire dans une position relâchée, représentée à la figure 3, la couleur de la pastille 17 peut être aperçue par l'extrémité 29 de l'élément 25.

Compte tenu du calibrage approprié de l'organe témoin 23, on comprend donc que tant qu'on n'aperçoit pas la couleur de la pastille 17 par extrémité 29 de l'élément 25, cela signifie que les anodes de la batterie 1 n'ont pas atteint un degré de corrosion au-delà duquel on estime que la batterie doit être changée.

Dès qu'on aperçoit la couleur de la pastille 17 par l'extrémité 29 externe de l'élément 25, il faut envisager de changer la batterie 1.

Du fait que l'organe témoin 23 est soumis rigoureusement aux mêmes conditions que les grilles métalliques des anodes de la batterie 1, tant en ce qui concerne le contact avec l'électrolyte 5 qu'en ce qui concerne la température (laquelle peut être élevée lorsque la batterie est située près d'un moteur), on peut considérer que le degré de corrosion de cet organe témoin 23 donne une image fidèle du degré de corrosion des anodes de la batterie 1, et donc que le dispositif selon l'invention offre une fiabilité satisfaisante.

Comme on peut le comprendre à la lumière de ce qui précède, le dispositif selon l'invention ne nécessite aucune mesure de tension ou de courant aux bornes de la batterie, et ne fait intervenir aucun moyen complexe tel qu'un calculateur électronique. De plus, le dispositif n'oblige pas l'homme du métier à modifier les électrodes de la batterie et peut être, par exemple, fourni comme un élément autonome.

Le dispositif selon l'invention est donc simple et peu coûteux, ce qui permet d'envisager de le monter de série sur les batteries sans qu'il soit nécessaire d'augmenter de manière significative le prix de ces dernières. En outre, le dispositif préserve l'environnement en n'affectant pas le niveau de recyclage de la batterie.

Bien entendu, la présente invention n'est pas limitée au mode de réalisation décrit et représenté, fourni à titre d'exemple illustratif et non limitatif.

## Revendications

1. Dispositif pour diagnostiquer l'état de corrosion d'une batterie (1) comprenant des électrodes (3) immergées dans un électrolyte (5), un organe témoin (23) destiné à être immergé dans ledit électrolyte (5) et dont le degré de corrosion est représentatif du degré de corrosion de parties de certaines desdites électrodes (3), et des moyens mécaniques (13, 17, 22, 25) pour signaler quand le degré de corrosion dudit organe témoin (23) dépasse un seuil prédéterminé correspondant à un degré de corrosion desdites parties au-delà duquel on estime que ladite batterie (1) doit être remplacée, **caractérisé en ce que** lesdits moyens mécaniques comprennent un élément mobile (13) avec des moyens élastiques (22) entre une première position compressée d'origine et une seconde position relâchée dans laquelle l'élément mobile réalise un contact mécanique avec un élément de signalisation (25) indiquant à l'extérieur ledit degré de corrosion de la batterie.

2. Dispositif selon la revendication 1, **caractérisé en ce que** l'élément mobile (13) est maintenu dans ladite première position par un témoin (23) jusqu'à ce que ledit témoin (23) change de forme après avoir atteint ledit degré de corrosion, ledit changement de forme étant adapté à ce que l'élément mobile (13) atteigne ladite seconde position relâchée, de préférence ledit témoin (23) change de forme en se cassant.

3. Dispositif selon l'une des revendications 1 ou 2, **caractérisé en ce que** ledit élément mobile comprennent un piston (13) et les moyens élastiques comprennent un ressort (22), les deux (13, 22) étant logés dans une douille (11).

4. Dispositif selon l'une des revendications précédentes, **caractérisé en ce qu'**il comprend un capteur autonome monté dans la batterie indépendamment des électrodes (3) de la batterie (1).

5. Dispositif selon l'une des revendications précédentes, **caractérisé en ce que** ledit élément mobile porte une pastille colorée (17), et ledit élément de signalisation comprend un élément transparent (25) dont une extrémité est respectivement éloignée ou en contact avec ladite pastille colorée (17) selon que ledit piston (13) se trouve en position comprimée ou relâchée, et dont l'autre extrémité débouche à l'extérieur de ladite batterie (1).

6. Dispositif selon l'une des revendications précédentes, **caractérisé en ce que** ledit organe témoin (23) est formé dans un alliage métallique.

7. Batterie comprenant des électrodes (3) immergées dans un électrolyte (5), **caractérisée en ce qu'**elle est équipée d'un dispositif (9) conforme à l'une quelconque des revendications précédentes pour diagnostiquer le degré de corrosion de parties de certaines desdites électrodes (3).

8. Batterie selon la revendication 7, **caractérisée en ce que** lesdites certaines électrodes sont des anodes.

9. Batterie selon la revendication 8, **caractérisée en ce que** lesdites parties d'électrodes sont des grilles métalliques desdites anodes.

## Patentansprüche

1. Vorrichtung zur Diagnose des Korrosionszustandes einer Batterie (1) mit in einem Elektrolyt (5) getauchten Elektroden (3), einem Meldeglied (23), das dazu bestimmt ist, in das Elektrolyt (5) getaucht zu werden und dessen Korrosionsgrad repräsentativ für den Korrosionsgrad von Teilen bestimmter der genannten Elektroden (3) ist, mechanischen Mitteln (13, 17, 22, 25) zum Anzeigen, wann der Korrosionsgrad des Meldeglieds (23) einen vorbestimmten Grenzwert überschreitet, welcher einem Korrosionsgrad der genannten Teile entspricht, über welchem man davon ausgeht, dass die Batterie (1) ersetzt werden muss, **dadurch gekennzeichnet, dass** die mechanischen Mittel ein mobiles Element (13) mit elastischen Mitteln (22) umfassen, zwischen einer ersten zusammengedrückten Ursprungsstellung und einer zweiten gelösten Stellung, in welcher das mobile Element einen mechanischen Kontakt mit einem Anzeigeelement (25) herstellt, wodurch nach außen der Korrosionsgrad der Batterie angezeigt wird.

2. Vorrichtung gemäß Anspruch 1, **dadurch gekennzeichnet, dass** das mobile Element (13) durch einen Melder (23) in der ersten Stellung gehalten wird, bis der Melder (23) seine Form ändert, nachdem er den Korrosionsgrad erreicht hat, wobei die Formänderung derart angepasst ist, dass das mobile Element (13) die zweite gelöste Stellung erreicht, wobei der Melder (23) seine Form vorzugsweise dadurch ändert, dass er bricht.

3. Vorrichtung gemäß einem der Ansprüche 1 oder 2, **dadurch gekennzeichnet, dass** das mobile Element einen Kolben (13) umfasst und dass die elastischen Mittel eine Feder (22) umfassen, wobei beide (13, 22) in einer Hülse (11) sitzen.

4. Vorrichtung gemäß einem der vorhergehenden Ansprüche, **dadurch gekennzeichnet, dass** sie einen autonomen Sensor umfasst, der unabhängig von den Elektroden (3) der Batterie (1) in der Batterie montiert ist.

5. Vorrichtung gemäß einem der vorhergehenden Ansprüche, **dadurch gekennzeichnet, dass** das mobile Element ein gefärbtes Plättchen (17) trägt, und dass das Anzeigeelement ein durchsichtiges Element (25) umfasst, dessen eines Ende jeweils vom gefärbten Plättchen (17) entfernt ist oder mit diesem in Kontakt ist, je nach dem ob der Kolben (13) sich in einer zusammengedrückten oder gelösten Stellung befindet, und dessen anderes Ende aus der Batterie (1) herausmündet.

6. Vorrichtung gemäß einem der vorhergehenden Ansprüche, **dadurch gekennzeichnet, dass** das Meldeglied (23) aus einer metallischen Legierung gebildet ist.

7. Batterie mit in einem Elektrolyt (5) getauchten Elektroden (3), **dadurch gekennzeichnet, dass** sie mit einer Vorrichtung (9) gemäß einem der vorhergehenden Ansprüche ausgerüstet ist, um den Korrosionsgrad von Teilen bestimmter der genannten Elektroden (3) zu diagnostizieren.

8. Batterie gemäß Anspruch 7, **dadurch gekennzeichnet, dass** die bestimmten Elektroden Anoden sind.

9. Batterie gemäß Anspruch 8, **dadurch gekennzeichnet, dass** die Teile der Elektroden metallische Gitter der Anoden sind.

**Claims**

1. A device for diagnosing the state of corrosion of a battery (1) comprising electrodes (3) immersed in an electrolyte (5), an indicating member (23) which is intended to be immersed in said electrolyte (5) and of which the degree of corrosion is representative of the degree of corrosion of parts of some of said electrodes (3), and mechanical means (13, 17, 22, 25) for signalling when the degree of corrosion of said indicating member (23) exceeds a predetermined threshold corresponding to a degree of corrosion of said parts, beyond which it is considered that said battery (1) has to be replaced, **characterised in that** said mechanical means comprise an element (13) movable with elastic means (22) between a first compressed original position and a second released position in which the movable element provides mechanical contact with a signalling element (25) indicating to the exterior said degree of corrosion of the battery.

2. A device according to claim 1 **characterised in that** the movable element (13) is held in said first position by an indicating member (23) until said indicating member (23) changes shape after having attained said degree of corrosion, said change in shape being adapted to the movable element (13) reaching said second released position, preferably said indicating member (23) changing shape by breaking.

3. A device according to one of claims 1 and 2 **characterised in that** the movable element comprises a piston (13) and the elastic means comprise a spring (22), the two (13, 22) being accommodated in a sleeve (11).

4. A device according to one of the preceding claims **characterised in that** it comprises an autonomous sensor mounted in the battery independently of the electrodes (3) of the battery (1).

5. A device according to one of the preceding claims **characterised in that** said movable element carries a coloured cap (17) and said signalling element comprises a transparent element (25) of which one end is respectively remote from or in contact with said coloured cap (17) according to whether said piston (13) is in the compressed or released position and of which the other end opens to the exterior of said battery (1).

6. A device according to one of the preceding claims **characterised in that** said indicating member (23) is formed of a metal alloy.

7. A battery comprising electrodes (3) immersed in an electrolyte (5) **characterised in that** it is equipped with a device (9) according to any one of the preceding claims for diagnosing the degree of corrosion of parts of some of said electrodes (3).

8. A battery according to claim 7 **characterised in that** said some electrodes are anodes.

9. A battery according to claim 8 **characterised in that** the parts of electrodes are metallic grids of said anodes.

Fig. 1

Fig. 2

Fig. 3